# EUROPÄISCHE PATENTSCHRIFT

(11) **EP 2 754 774 B1**
(45) Veröffentlichungstag und Bekanntmachung des Hinweises auf die Patenterteilung: **31.03.2021**
(21) Anmeldenummer: 14151087.5
(22) Anmeldetag: 14.01.2014
(51) Int. Cl.: E04F 15/18, E04F 15/20, B32B 5/02, B32B 5/26, D06N 7/00

(54) **ZWISCHENSCHICHT FÜR EINE BELAGSKONSTRUKTION**
INTERMEDIATE LAYER FOR A LINING STRUCTURE
COUCHE INTERMÉDIAIRE POUR UNE CONSTRUCTION DE REVÊTEMENT

(30) Priorität: 15.01.2013 DE 102013100361
(43) Veröffentlichungstag der Anmeldung: 16.07.2014
(73) Patentinhaber: Thronicke, Sandro, 64404 Bickenbach (DE)
(72) Erfinder: Thronicke, Sandro, 64404 Bickenbach (DE)
(74) Vertreter: Reiser & Partner Patentanwälte mbB

(56) Entgegenhaltungen:
- EP-A2- 2 159 346
- WO-A1-00/42258
- WO-A1-03/059613
- WO-A1-2005/045152
- DE-U1- 20 018 841
- DE-U1-202010 008 978
- FR-A1- 2 890 405
- "weber.sys 835 Fliesen-Armierungsgewebe, Technisches Merkblatt", Saint-Gobain Weber , 14 March 2016 (2016-03-14), Retrieved from the Internet: URL:https://www.sg-weber.de/uploads/tx_web erproductpage/printable_sheet_weber_sys_83 5.pdfhttps:// [retrieved on 2016-11-15]
- "Haftklebstoffe", INTERNET CITATION, 1 December 2006 (2006-12-01), XP007909821, Retrieved from the Internet: URL:http://www.roempp.com/prod/roempp.php [retrieved on 2009-09-17]

## Beschreibung

Die Erfindung betrifft eine Zwischenschicht für eine Belagskonstruktion, umfassend eine erste Schicht mit einer ersten Hauptseite und einer zweiten Hauptseite, ausgebildet als Gittergewebe mit sich kreuzenden Fäden.

Das Gittergewebe umfasst Fäden, welche meist als Glasfasern ausgebildet sind. Ein derartiges Gittergewebe wird auch als Glasgittergewebe bezeichnet. Das Gittergewebe findet Verwendung als Zwischenschicht in Belagskonstruktionen und wird beispielsweise in einen Fliesenkleber eingebettet, so dass das Gittergewebe anschließend zwischen Untergrund und Fliesenbelag angeordnet ist. Das Gittergewebe nimmt dabei über den Untergrund eingetragene Spannungen auf und verhindert, dass diese Spannungen in den Fliesenbelag weitergeleitet werden, wo diese zu Rissbildung führen können.

Aus dem Stand der Technik ist es bekannt, die Fäden des Gittergewebes auf einer Hauptseite mit einem Klebemittel zu beschichten, so dass das Gittergewebe während der Montage auf einem Untergrund fixiert werden kann. Der Vorteil liegt darin, dass das Gittergewebe während der Montagearbeiten nicht verrutschen kann. Bei dieser Ausgestaltung drückt sich jedoch der Fliesenkleber durch die Maschen des Gittergewebes hindurch, so dass das Gittergewebe fest in den Verbund zwischen Untergrund und Fliesenbelag eingebettet ist. Somit werden innerhalb des Untergrundes auftretende Bewegungen nach wie vor in den Fliesenbelag übertragen. Des Weiteren erfolgt auch eine direkte Schallübertragung über den Fliesenbelag in den Untergrund.

WO 2005/045152 A1 zeigt ein mehrschichtiges Entkopplungs-, Abdichtungs- und Dränagesystem. Das mehrschichtige System kann eine Armierungsschicht umfassen, welche aus einem gitterartig angeordneten Glasfasergewebe bestehen kann.

WO 03/059613 A1 beschreibt einen Wand- oder Bodenbelag, welcher im Wesentlichen aus zwei Lagen eines Polyesterfaservlieses besteht, welche mittels einer Klebeschicht miteinander verklebt sind.

EP 2 159 346 A2 zeigt eine Fliesenverlegematte mit einer Feuchtigkeitsaufnahmeschicht, welche mit einer dreidimensionalen Struktur versehen ist.

DE 20 2010 008 978 U1 zeigt ein Bodenbelagsträgerelement, bestehend aus einer profilierten Kunststoffbahn, auf welches oberseitig ein Gittergewebe aufgeklebt ist. Eine vergleichbare Ausgestaltung zeigt WO 00/42258.

Der Erfindung liegt die Aufgabe zugrunde, eine ein Gittergewebe umfassende Zwischenschicht bereitzustellen, welche eine mechanische Entkopplung des Fliesenbelags von dem Untergrund ermöglicht.

Diese Aufgabe wird mit den Merkmalen von Anspruch 1 gelöst. Auf vorteilhafte Ausgestaltungen nehmen die Unteransprüche Bezug.

Zur Lösung der Aufgabe ist zumindest auf der ersten Hauptseite der ersten Schicht eine zweite vollflächig ausgebildete Schicht angeordnet. Im Gegensatz zu der bekannten Beschichtung der Fäden, bei der lediglich ein Klebemittel einseitig und ausschließlich auf den Fäden aufgebracht ist, ist bei der erfindungsgemäßen Ausgestaltung die zweite Schicht vollflächig ausgebildet, so dass sich ein Fliesenkleber, welcher auf das Gittergewebe aufgebracht wird, nicht durch das Gittergewebe hindurch bis auf den Untergrund erstrecken kann. Zur Montage wird die Zwischenschicht auf den Untergrund aufgelegt, ein Fliesenkleber wird auf das Gittergewebe aufgebracht und anschließend wird der Fliesenbelag in den Fliesenkleber eingebettet. Dabei ist der Fliesenbelag mechanisch von dem Untergrund getrennt, so dass die Zwischenschicht eine Entkopplungsmatte bildet. Die Zwischenschicht kann als Plattenware oder als Rollenware ausgebildet sein.

Erfindungsgemäß ist die zweite Schicht als Klebeschicht ausgebildet. Konkret ist die Zwischenschicht mit einer Selbstklebeschicht ausgerüstet. Durch die Klebeschicht kann die Zwischenschicht stoffschlüssig mit dem Untergrund verbunden werden, so dass sich die Zwischenschicht während der Montage des Fliesenbelags nicht verschieben kann. Vorzugsweise ist dabei die Klebeschicht vor der Montage der Zwischenschicht mit einer Abdeckfolie überdeckt. Diese wird vor der Montage der Zwischenschicht abgezogen.

Die zweite Schicht ist als Kunststoffschicht ausgebildet. Die Dicke der zweiten Schicht beträgt dabei vorzugsweise zwischen 0,1 mm und 1,5 mm. Eine derartige Kunststoffschicht ist kostengünstig herstellbar und weist vorteilhafte mechanische Eigenschaften auf.

Die zweite Schicht ist mit einer Faserverstärkung versehen. Dabei ist die Faserverstärkung vorzugsweise in Form eines Gitters ausgebildet, welches im Vergleich zu dem Gittergewebe der ersten Schicht feinere Fäden aufweist. Die Faserverstärkung der zweiten Schicht bewirkt eine Verbesserung der Dimensionsstabilität. Dies gilt insbesondere dann, wenn die zweite Schicht neben der Faserverstärkung ausschließlich einen elastischen Kunststoffkleber aufweist.

Die Klebeschicht umfasst einen Butylkleber oder einen Acrylatkleber. Butylkleber oder Acrylatkleber sind geeignet, bei Umgebungstemperaturen auf Betonuntergründen und dergleichen zu haften. Dadurch ist gewährleistet, dass die mit diesen Klebstoffen versehene Zwischenschicht auf üblichen Untergründen haftet.

Vorteilhafterweise ist die Maschenweite des Gittergewebes kleiner als 5 mm und beträgt vorzugsweise zwischen 1,5 mm und 3 mm. Diese verhältnismäßig kleine Maschenweite ist vorteilhaft, da sich bei größeren Maschenweiten die zweite Schicht durch die erste Schicht hindurchdrücken kann. Dies gilt insbesondere dann, wenn die zweite Schicht elastisch ausgebildet ist.

Auf der zweiten Hauptseite kann eine dritte Schicht angeordnet sein, ausgebildet als Gittergewebe. Die erste Schicht und die dritte Schicht können mittels separater Befestigungsmittel oder stoffschlüssig miteinander verbunden sein. Bei dieser Ausgestaltung ergibt sich ein höherer Aufbau der Zwischenschicht, wobei sowohl die erste Schicht als auch die dritte Schicht mechanisch belastbar sind. Im Ergebnis ergibt sich dadurch eine besonders biegesteife Ausgestaltung der Zwischenschicht.

Die Biegesteifigkeit der Zwischenschicht vergrößert sich noch einmal, wenn die erste Schicht und die dritte Schicht über Abstandshalter miteinander verbunden sind. Bei dieser Ausgestaltung sind die erste Schicht und die dritte Schicht voneinander beabstandet.

Einige Ausführungsbeispiele der erfindungsgemäßen Zwischenschicht werden nachfolgend anhand der Figuren näher erläutert. Diese zeigen, jeweils schematisch:
Fig. 1 eine Zwischenschicht in der Draufsicht;
Fig. 2 eine Zwischenschicht in der Seitenansicht;
Fig. 3 eine Zwischenschicht mit einer Kunststofffolie auf der zweiten Schicht;
Fig. 4 eine Zwischenschicht mit Faserverstärkung in der zweiten Schicht;
Fig. 5 eine Zwischenschicht mit einer auf der ersten Schicht angeordneten dritten Schicht;
Fig. 6 eine Zwischenschicht mit Abstandshaltern zwischen erster und zweiter Schicht;
Fig. 7 eine Belagskonstruktion mit erfindungsgemäßer Zwischenschicht.

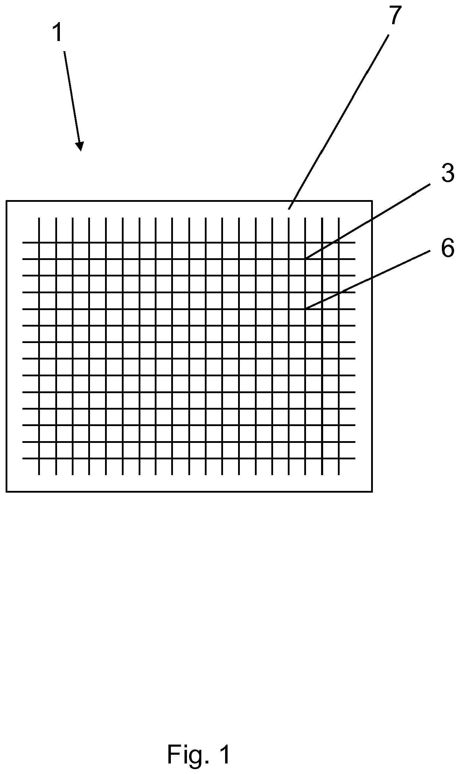

Figur 1 zeigt in der Draufsicht eine Zwischenschicht 1 für eine Belagskonstruktion 2. Als Belagskonstruktion 2 kommen insbesondere Bodenaufbauten mit mineralischen Belägen, beispielsweise Fliesen oder Plattenbelägen in Betracht. Es ist jedoch auch vorteilhaft, Holzböden mit einer Zwischenschicht 1 zu versehen. Die Zwischenschicht 1 umfasst eine Schicht 3 mit einer ersten Hauptseite 4 und einer zweiten Hauptseite 5, ausgebildet als Gittergewebe mit sich kreuzenden Fäden 6.

Eine vorteilhafte Ausgestaltung eines Gittergewebes umfasst Kettfäden und Schussfäden, wobei jeweils mehrere Schussfäden zu einem Hauptfaden zusammengefasst sind, welche die Kettfäden derart umschlingen, dass je Hauptfaden einige Schussfäden oberhalb der Kettfäden und einige Schussfäden unterhalb der Kettfäden verlaufen. Die Fäden 6 bestehen in dieser Ausgestaltung aus Glasfasern. Es sind jedoch auch andere Werkstoffe, beispielsweise Carbon oder Metall denkbar. Die Maschenweite der Fäden 6 ist kleiner als 5 mm, in dieser Ausgestaltung beträgt die Maschenweite 2 mm. Die Fadenbreite beträgt 0,8 mm.

Auf der ersten Hauptseite 4 ist eine zweite Schicht 7 angeordnet, welche flächig ausgebildet ist und die erste Schicht 3 vollflächig bedeckt. Dadurch können sich keinerlei Materialien über die erste Hauptseite 4 durch die erste Schicht 3 hindurchdrücken. Die zweite Schicht 7 ist als Klebeschicht ausgebildet und umfasst einen flächig ausgebildeten Acrylatkleber. Alternativ kann die Klebeschicht auch aus Butylkleber bestehen. Die zweite Schicht 7 ist kostengünstig als Kunststoffschicht ausgebildet und weist eine Dicke zwischen 0,1 mm und 1,5 mm auf.

Die Zwischenschicht 1 kann als Plattenware oder als Bahnenware ausgebildet sein.

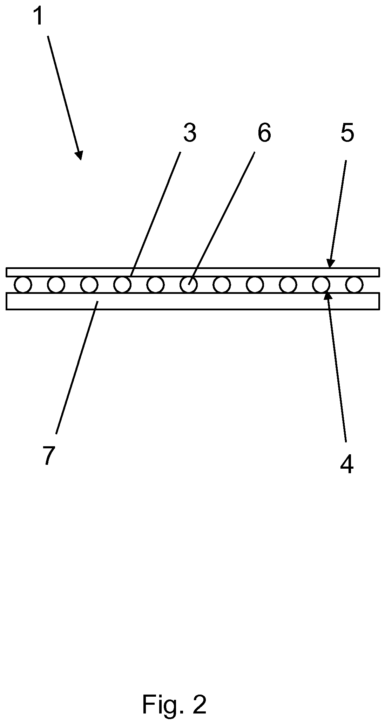

Figur 2 zeigt die Ausgestaltung gemäß Figur 1 in der Seitenansicht.

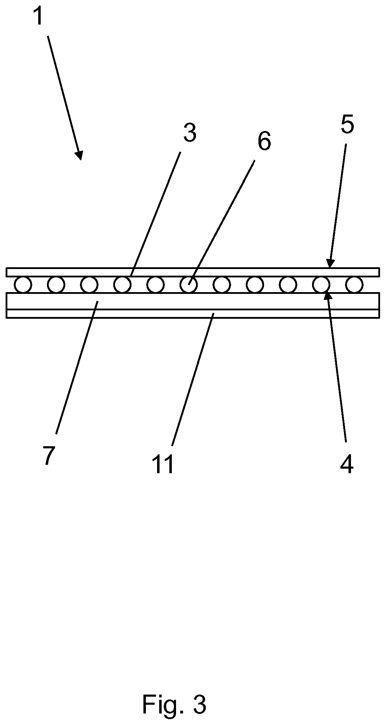

Figur 3 zeigt die Ausgestaltung gemäß Figur 1, wobei die zweite Schicht 7 zur Verbesserung des Handlings und zum Schutz der Klebeschicht mit einer Abziehfolie 11 abgedeckt ist. Die Abziehfolie 11 wird vor dem Verlegen der Zwischenschicht 1 entfernt.

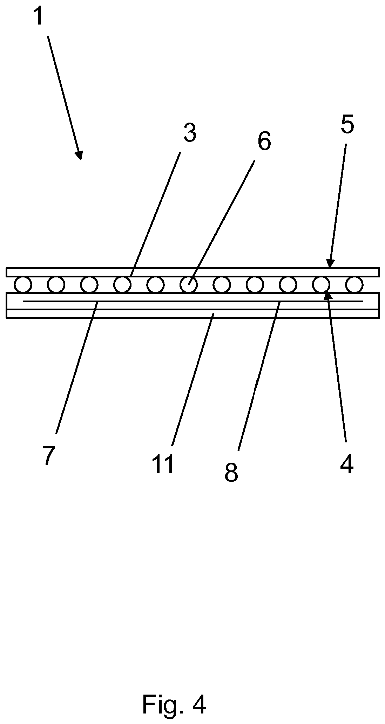

Figur 4 zeigt die Ausgestaltung gemäß Figur 3, wobei die zweite Schicht 7 zur Verbesserung der Formstabilität mit einer Faserverstärkung 8 versehen ist. Die Faserverstärkung 8 ist in Form eines Gittergewebes ausgebildet, welches im Vergleich zu dem Gittergewebe der ersten Schicht 3 feinere Fäden aufweist, welche in größerer Maschenweite vorliegen. Die Faserverstärkung 8 ist in die zweite Schicht 7 eingebettet.

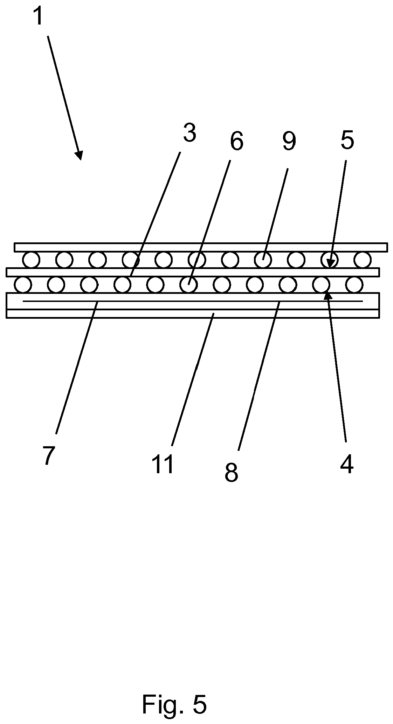

Figur 5 zeigt die Ausgestaltung gemäß Figur 4, wobei zusätzlich auf der zweiten Hauptseite 5 eine dritte Schicht 9 angeordnet ist. Die dritte Schicht 9 ist ebenfalls als Gittergewebe ausgebildet. Im Vergleich zu dem Gittergewebe der ersten Schicht 3 weist das Gittergewebe der dritten Schicht 9 eine größere Maschenweite und breitere Fäden auf. Die Maschenweite der dritten Schicht 9 beträgt 10 mm. Die Fadenbreite beträgt 2 mm.

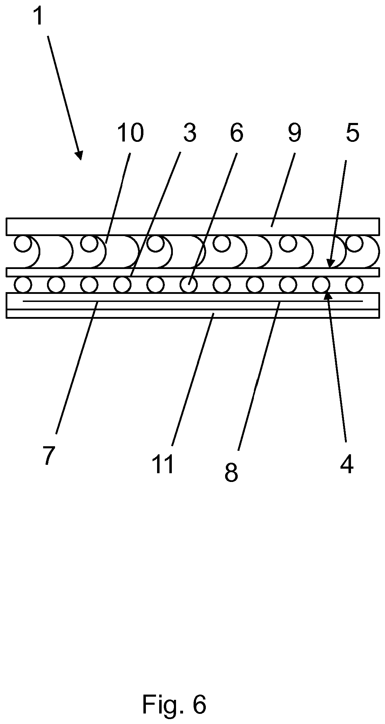

Figur 6 zeigt die Ausgestaltung gemäß Figur 5, wobei die erste Schicht 3 und die dritte Schicht 9 in dieser Ausgestaltung über Abstandshalter 10 miteinander verbunden sind.

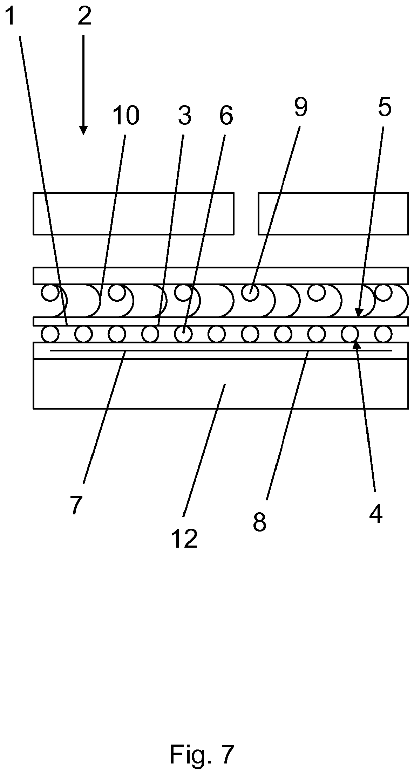

Figur 7 zeigt eine Belagskonstruktion 2 mit einer Zwischenschicht 1 gemäß Figur 6. Zur Herstellung der Belagskonstruktion 2 wird die Zwischenschicht 1 nach Entfernen der Abziehfolie 11 auf den Untergrund 12 aufgelegt und haftet dort über die Klebeschicht der zweiten Schicht 7 an. Anschließend wird ein Fliesenkleber auf die Zwischenschicht 1 aufgetragen, welcher über die dritte Schicht 9 hindurch die erste Schicht 3 durchdringt und nach dem Aushärten fest in die Maschen der ersten Schicht 3 und der dritten Schicht 9 eingebunden ist. Nach dem Auftragen des Fliesenklebers werden Fliesen in den Fliesenkleber eingebettet. Da der Fliesenkleber die zweite Schicht 7 nicht durchdringt, sind die Fliesen zwar fest an die Zwischenschicht 1 angebunden, aber von dem Untergrund 12 entkoppelt. Die Kunststofffolie der zweiten Schicht 7 bewirkt eine Abdichtung gegen Feuchtigkeit.

## Patentansprüche

1. Zwischenschicht (1) für eine Belagskonstruktion (2), umfassend eine erste Schicht (3) mit einer ersten Hauptseite (4) und einer zweiten Hauptseite (5), ausgebildet als Gittergewebe mit sich kreuzenden Fäden (6), wobei zumindest auf der ersten Hauptseite (4) eine zweite vollflächig ausgebildete Schicht (7) angeordnet ist, **dadurch gekennzeichnet, dass** die zweite Schicht (7) als Selbstklebeschicht ausgebildet ist und einen Butylkleber oder einen Acrylatkleber umfasst und dass die zweite Schicht (7) mit einer Faserverstärkung (8) versehen ist.

2. Zwischenschicht nach Anspruch 1, **dadurch gekennzeichnet, dass** die zweite Schicht (7) eine flächige Kunststoffschicht aufweist.

3. Zwischenschicht nach Anspruch 1 oder 2, **dadurch gekennzeichnet, dass** die Maschenweite des Gittergewebes kleiner als 5 mm ist, vorzugsweise zwischen 1,5 mm und 3 mm beträgt.

4. Zwischenschicht nach einem der Ansprüche 1 bis 3, **dadurch gekennzeichnet, dass** auf der zweiten Hauptseite (5) eine dritte Schicht (9) angeordnet ist, ausgebildet als Gittergewebe.

5. Zwischenschicht nach Anspruch 4, **dadurch gekennzeichnet, dass** die erste Schicht (3) und die dritte Schicht (9) über Abstandshalter (10) miteinander verbunden sind.

## Claims

1. Intermediate layer (1) for a lining structure (2), comprising a first layer (3) having a first main side (4) and a second main side (5) embodied as a lattice fabric having crossing threads (6), wherein a second layer (7) that covers the entire surface is arranged at least on the first main side (4), **characterised in that** the second layer (7) is embodied as a self-adhesive layer and comprises a butyl adhesive or an acrylate adhesive and that the second layer (7) is provided with a fibre reinforcement (8).

2. Intermediate layer according to claim 1, **characterised in that** the second layer (7) comprises a planar plastic layer.

3. Intermediate layer according to claim 1 or 2, **characterised in that** the mesh size of the lattice fabric is smaller than 5 mm, preferably between 1.5 mm and 3 mm.

4. Intermediate layer according to any one of claims 1 to 3, **characterised in that** a third layer (9) is arranged on the second main side (5) and said third layer is embodied as a lattice fabric.

5. Intermediate layer according to claim 4, **characterised in that** the first layer (3) and the third layer (9) are connected to one another via a spacer (10).

## Revendications

1. Couche intermédiaire (1) pour une construction de revêtement (2), comprenant une première couche (3) dotée d'une première face principale (4) et d'une deuxième face principale (5), réalisée comme structure grillagée avec des fils (6) entrecroisés, une deuxième couche (7) réalisée de manière à s'étendre sur toute la surface étant disposée au moins sur la première face principale (4), **caractérisée en ce que** la deuxième couche (7) est réalisée comme couche auto-adhésive et comprend un adhésif en butyle ou un adhésif acrylate et **en ce que** la deuxième couche (7) est pourvue d'un renfort de fibres (8).

2. Couche intermédiaire selon la revendication 1, **caractérisée en ce que** la deuxième couche (7) comporte une couche de plastique plane.

3. Couche intermédiaire selon la revendication 1 ou 2, **caractérisée en ce que** la dimension des mailles de la structure grillagée est inférieure à 5 mm, de préférence entre 1,5 mm et 3 mm.

4. Couche intermédiaire selon l'une des revendications 1 à 3, **caractérisée en ce qu'**une troisième couche (9), réalisée comme structure grillagée, est disposée sur la deuxième face principale (5).

5. Couche intermédiaire selon la revendication 4, **caractérisée en ce que** la première couche (3) et la troisième couche (9) sont reliées l'une à l'autre par le biais d'écarteurs (10).
